# NOUVEAU FASCICULE DE BREVET EUROPEEN

(11) **EP 0 486 371 B2**
(45) Date de publication et mention de la décision concernant l'opposition: **25.07.2001**
(45) Mention de la délivrance du brevet: 05.06.1996
(21) Numéro de dépôt: 91402999.6
(22) Date de dépôt: 07.11.1991
(51) Int. Cl.: B02C 15/06, B02C 15/04, B02C 15/14

(54) **Broyeur pour la broyage fin de matériaux**
Mühle zum Feinmahlen von Materialien
Mill for finely grinding materials

(30) Priorité: 12.11.1990 FR 9014004; 01.08.1991 FR 9109788
(43) Date de publication de la demande: 20.05.1992
(73) Titulaire: F C B, 93100 Montreuil Cédex (FR)
(72) Inventeur: Durinck, René, F-59650 Villeneuve d'Ascq (FR); Cordonnier, Alain, F-59000 Lille (FR); Boussekey, Bernard, F-59800 Lille (FR); Verbaere, Yves, F-59480 Salome (FR)
(74) Mandataire: Duthoit, Michel

(56) Documents cités:
- EP-A- 0 268 737
- DE-C- 249 567
- DE-C- 345 915
- DE-C- 548 555
- DE-C- 596 858
- DE-C- 667 011
- FR-A- 471 647
- FR-A- 2 385 938
- GB-A- 362 327
- GB-A- 2 132 506
- ZEMENT-KALK-GIPS vol. 57, no. 4, Avril 1968, WIESBADEN DE. pages 145 - 157; H. BÖRNER: 'das mahlverfahren von weich gebranntem kalk'

## Description

La présente invention a pour objet un appareil de broyage fin de matériaux tels que les matières premières pour la fabrication du ciment, le clinker, certains minerais, etc... Pour cette opération, on utilise communément des broyeurs tubulaires à boulets. Les broyeurs à meules verticaux conviennent aux broyage et séchage simultanés des matières premières mais pas au broyage du clinker car ils ne permettent pas d'obtenir du ciment de qualité satisfaisante. Les presses à cylindres sont essentiellement utilisées en prébroyage du clinker.

Les broyeurs à boulets ont un très mauvais rendement énergétique, en particulier parce qu'ils ne permettent pas d'effectuer un broyage systématique, l'avancement de la matière dans le broyeur et l'action des boulets sur la matière étant incertains.

Les broyeurs à meules verticaux ont un meilleur rendement de broyage. Cependant, pour obtenir la finesse désirée, on doit faire passer la matière sous les meules un grand nombre de fois. Pour cela, on équipe ces appareils de plusieurs meules, billes ou galets et on effectue un recyclage des produits dépassant généralement dix fois le débit nominal. Ces appareils qui comportent une multiplicité d'organes de broyage sont lourds et coûteux et la recirculation d'une grande quantité de matière, généralement par voie pneumatique, absorbe une quantité d'énergie importante qui annule en grande partie le gain d'énergie de broyage. Les broyeurs verticaux à galets pendulaires et horizontaux à anneau présentent les mêmes inconvénients que les broyeurs à meules.

Les presses à cylindres, dans lesquelles la matière à broyer est soumise à une pression moyenne supérieure à 50 MPa en un seul passage, fournissent un produit prébroyé et aggloméré et, pour obtenir le produit à la finesse voulue, la matière prébroyée doit subir un broyage complémentaire dans un autre appareil tel qu'un broyeur à boulets. Dans ces appareils, l'agglomération de la matière due aux fortes pressions appliquées absorbe une partie de l'énergie en pure perte tandis que, à cause des pressions de broyage très élevées, les organes actifs, en particulier les paliers et les revêtements des cylindres, sont soumis à des contraintes mécaniques très importantes, nécessitant un entretien coûteux et des réparations fréquentes. Enfin son champ d'application est restreint au broyage des matières fragiles, très peu humides et pas trop abrasives.

On connaît aussi (FR-A-471647 et GB-A-362327) un broyeur constitué par un tambour rotatif, à axe horizontal, à l'intérieur duquel roule un rouleau dont la largeur est sensiblement égale à celle du tambour et qui est équipé d'un dispositif d'avance pas-à-pas de la matière qui permet de régler la vitesse de déplacement le long du tambour. Dans ce broyeur la pression qui s'exerce sur la matière est uniquement due au poids du rouleau et est trop faible pour qu'il soit possible d'obtenir des produits broyés ayant les mêmes caractéristiques que ceux obtenus avec un broyeur tubulaire à boulets.

Le but de la présente invention est de proposer un broyeur assurant un broyage systématique permettant d'obtenir les mêmes résultats qu'un broyeur tubulaire à boulets avec un rendement énergétique bien supérieur.

La présente invention a pour objet un broyeur comprenant un anneau rotatif à axe horizontal, au moins un rouleau apte à rouler sur la piste constituée par la surface intérieure de l'anneau et à exercer une pression sur la matière se trouvant sur la piste, des moyens pour entraîner l'anneau en rotation à une vitesse suffisante pour que la matière puisse être maintenue sur la piste par la force centrifuge, et un dispositif apte à déplacer transversalement la matière sur la piste d'un pas égal à une fraction de sa largeur, et caractérisé en ce que l'anneau est solidaire d'une virole cylindrique coaxiale qui forme sur un des côtés de l'anneau une chambre d'admission pour la matière à broyer, et en ce que ledit dispositif d'avance de la matière est prévu dans ladite chambre pour amener la matière, à chaque tour de tambour, pas à pas du point d'introduction dans la zone d'alimentation jusque sur la piste de broyage.

Des essais de broyage de clinker effectués sur une installation pilote équipée d'un broyeur de ce type ont montré que la qualité du produit fini était comparable à celle du ciment obtenu avec un broyeur à boulets; les courbes granulométriques sont très voisines et les tests sur mortier et béton donnent des résultats égaux ou supérieurs. Par ailleurs, la consommation spécifique est inférieure d'environ 40 % à celle d'un broyeur à boulets et voisine de celle d'une presse à cylindres.

On pourra éventuellement prévoir deux rouleaux angulairement espacés l'un de l'autre à l'intérieur de l'anneau et associer à chaque rouleau un dispositif d'avance de la matière. On pourra aussi prévoir, à l'intérieur de la virole plusieurs anneaux axialement espacés l'un de l'autre, et à l'intérieur de chaque anneau un ou plusieurs rouleaux.

L'anneau peut être supporté par un ou plusieurs appuis, l'un des appuis étant avantageusement placé sous le rouleau. Ces appuis peuvent être constitués par les galets ou par des coussinets ou des patins reliés à un système de lubrification qui maintient un film d'huile sur les surfaces de glissement du coussinet ou du patin et de l'anneau lorsque ce dernier est entraîné en rotation.

Le dispositif d'avance de la matière pourra avantageusement être constitué par un jeu de pales dont la largeur, comptée parallèlement à l'axe de l'anneau, est une fraction de la largeur de la piste, dont les plans font un angle avec un plan perpendiculaire à l'axe de l'anneau et qui sont disposés de façon à pénétrer dans la couche de matière retenue sur la piste par la force centrifuge lorsque l'anneau est en rotation.

Le dispositif pourra aussi être constitué par un racleur s'étendant parallèlement à l'axe de l'anneau et pénétrant dans la couche des matières retenues sur la piste de broyage par la force centrifuge pour l'en détacher, et par des plaques déflectrices disposées sous le racleur et orientées de façon à intercepter les matières détachées par le racleur et à les dévier vers la sortie du broyeur. Chaque plaque déflectrice sera montée de façon à pouvoir pivoter autour d'un axe, de préférence vertical, et sera inclinée, par exemple de 45°, soit de façon à dévier les matières vers l'axe de l'anneau, soit au contraire de façon à ramener les matières vers la piste de broyage. Des moyens de commande permettront de modifier l'orientation des plaques déflectrices pour régler la vitesse d'avance des matières sur la piste de broyage. Ce dispositif d'avance pas à pas des matières permet, en faisant tomber les matières en pluie de l'anneau sur les plaques déflectrices, l'extraction pneumatique des fines particules et le séchage des matières au moyen d'un courant d'air, éventuellement chaud, circulant à l'intérieur du broyeur.

Suivant une autre caractéristique de l'invention, le diamètre du rouleau et/ou de la piste de broyage varient progressivement ou par degrés d'une extrémité à l'autre du rouleau et/ou d'un bord à l'autre de la piste, respectivement, de telle sorte que l'écartement entre le rouleau et la piste décroisse progressivement ou par degrés de l'entrée vers la sortie de la zone de broyage. On pourra, par exemple, utiliser une piste cylindrique et un rouleau formé de deux parties ou plus de diamètres différents ou un rouleau tronconique, l'extrémité de petit diamètre du rouleau étant tournée vers l'entrée du broyeur. On pourra aussi utiliser une piste à plusieurs diamètres ou tronconique coopérant avec un rouleau cylindrique, tronconique ou étagé. Une disposition particulièrement avantageuse consiste à réaliser la piste et le rouleau de telle sorte que le rapport des diamètres de la piste et du rouleau soit le même dans toutes les sections afin qu'il ne se produise pas de glissement relatif entre les surfaces conjuguées. La piste et le rouleau auront une forme tronconique ou comporteront plusieurs portions cylindriques avec la portion de plus grand diamètre tournée vers l'entrée du broyeur.

Cette caractéristique combinée avec l'usage du dispositif d'avance pas à pas des matières permet de réaliser un broyage systématique dans des conditions optimales des produits à granulométrie hétérogène.

D'autres caractéristiques de l'invention apparaîtront à la lecture de la description qui suit et se réfère aux dessins l'accompagnant qui montrent, à titre d'exemple non limitatif, deux formes de réalisation de l'invention et sur lesquels :
- La figure 1 est une vue en élévation d'un broyeur à anneau conforme à l'invention, le carter côté sortie ayant été enlevé pour montrer l'intérieur de l'anneau;
- La figure 2 est une coupe suivant A-A du broyeur de la figure 1;
- La figure 3 est une vue en élévation d'un autre broyeur conforme à l'invention;
- La figure 4 est une coupe suivant B-B du broyeur de la figure 3;
- La figure 5 est une représentation schématique, en coupe verticale, d'un broyeur conforme à l'invention, équipé d'un rouleau étagé et d'un dispositif d'avance de la matière à plaques déflectrices.
- La figure 6 est une vue schématique, en plan, montrant l'orientation des plaques déflectrices;
- La figure 7 est une vue suivant F du broyeur de la figure 5;
- La figure 8 est une coupe suivant C-C du broyeur de la figure 1; et
- Les figures 9 à 11 sont des vues en coupe verticale illustrant des variantes de réalisation.

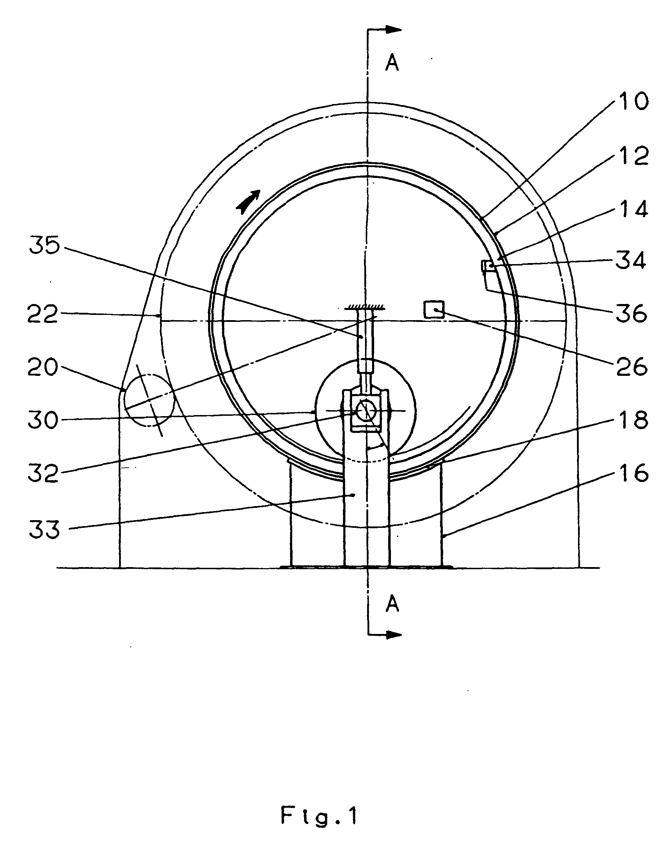

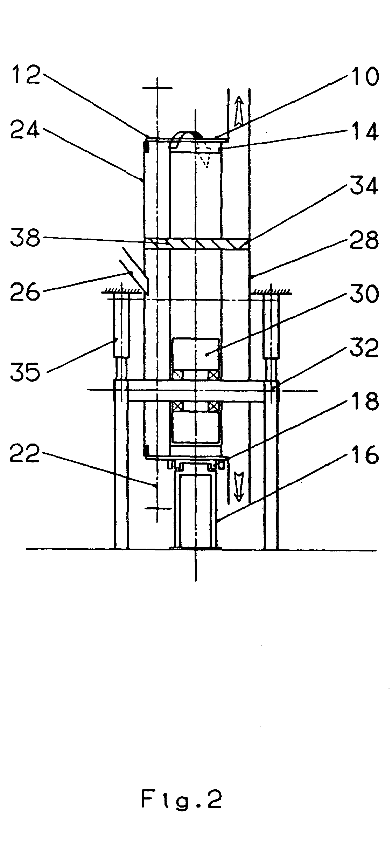

Le broyeur représenté sur les figures 1 et 2 comporte un corps rotatif 10 constitué par une courte virole cylindrique 12 à axe horizontal et un anneau concentrique 14 fixé à l'intérieur de la virole et constituant une piste de broyage.

Le corps 10 est supporté par un bâti 16 sur lequel il repose par l'intermédiaire d'un coussinet 18 situé sous l'anneau 14, qui épouse la forme de la virole et permet la rotation autour de son axe. Un système de lubrification, non représenté, fournit, lorsque le corps 10 est entraîné en rotation, de l'huile sous pression au coussinet 18 de façon à maintenir, par effet hydrodynamique, un film d'huile entre les surfaces de glissement du coussinet et de la virole.

Le corps 10 est entraîné en rotation par un groupe moto-réducteur, non représenté, dont l'arbre de sortie porte un pignon 20 en prise avec une couronne dentée 22 fixée sur la virole.

L'une des extrémités de la virole est fermée par une paroi fixe 24 percée d'une ouverture à laquelle est raccordée une goulotte d'alimentation 26. Le volume compris entre la paroi 24 et l'anneau constitue une chambre d'admission pour la matière à broyer qui est centrifugée et amenée à l'intérieur de l'anneau par un dispositif décrit ci-après. L'autre extrémité débouche dans un carter 28 qui est relié, à sa partie supérieure, à un circuit pneumatique permettant l'évacuation de la fraction fine des produits broyés, et dont le fond recueille l'autre fraction des produits broyés et permet leur évacuation à travers un sas non représenté. L'évacuation pneumatique pourra être assurée par de l'air de refroidissement ou par des gaz chauds de séchage, lorsque la matière à broyer contient de l'humidité, balayant l'intérieur de la virole. Les deux fractions des produits broyés sont amenées à des séparateurs où le produit fini, ayant la granulométrie voulue, est séparé des refus qui sont recyclés.

Un rouleau 30 est monté à l'intérieur de l'anneau 14, au-dessus du bâti 16 et roule sur la face intérieure de l'anneau lorsque le corps 10 est entraîné en rotation. Le rouleau 30 est monté fou sur un arbre 32 parallèle à l'axe de l'anneau 14.

Les extrémités de l'arbre 32, qui sont à l'extérieur de la virole, sont guidées par des glissières verticales 33 solidaires du bâti 16 ou par des leviers articulés sur ce bâti. Des ressorts ou des vérins 35 associés à un système hydropneumatique permettent d'exercer sur les extrémités de l'arbre des efforts qui sont transmis au rouleau et pressent ce dernier sur l'anneau 14. Des moyens classiques sont prévus pour régler les efforts exercés par les ressorts ou les vérins.

Le rouleau peut avoir une surface extérieure cylindrique ou légèrement convexe (bombée). La surface de la piste peut être cylindrique ou légèrement concave.

Un dispositif 34 destiné à assurer l'avance des produits, d'une extrémité à l'autre de la virole 12, est disposé dans la moitié supérieure du corps 10, sur la partie descendante de la trajectoire circulaire suivie par les produits broyés maintenus sur la piste 14 par la force centrifuge. Ce dispositif est constitué par une traverse fixe 36 qui s'étend de la paroi 24 au fond du carter 28 et qui porte sur toute sa longueur des pales 38 régulièrement espacées l'une de l'autre et dont les plans sont parallèles entre eux et forment un angle α avec un plan perpendiculaire à l'axe de la virole. L'extrémité des pales se trouve à faible distance de la surface de l'anneau 14, de sorte que les pales pénètrent dans la couche des produits broyés et, du fait de leur inclinaison, assurent le déplacement de la matière parallèlement à l'axe de la virole, d'un bord à l'autre de la piste. Les pales se trouvant de part et d'autre de l'anneau permettent, de la même manière, d'amener les produits à broyer sur la piste et d'évacuer les produits broyés.

La distance, comptée parallèlement à l'axe de l'anneau, entre le bord amont et le bord aval de chaque pale est une fraction de la largeur de la piste de broyage, de sorte que, à chaque tour de l'anneau, la matière se trouvant sur la piste est déplacée par les pales d'un pas égal à cette fraction de la largeur de la piste; elle passe donc plusieurs fois entre le rouleau et l'anneau et subit plusieurs broyages avant d'être chassée de la piste et évacuée.

Les pales 38 sont montées sur la traverse 36 de telle sorte qu'il soit possible de modifier leur orientation (angle α) et, par conséquent, de régler le temps de séjour de la matière sur la piste de broyage 14. Les moyens permettant ce réglage, qui peuvent être télécommandés, n'ont pas été représentés.

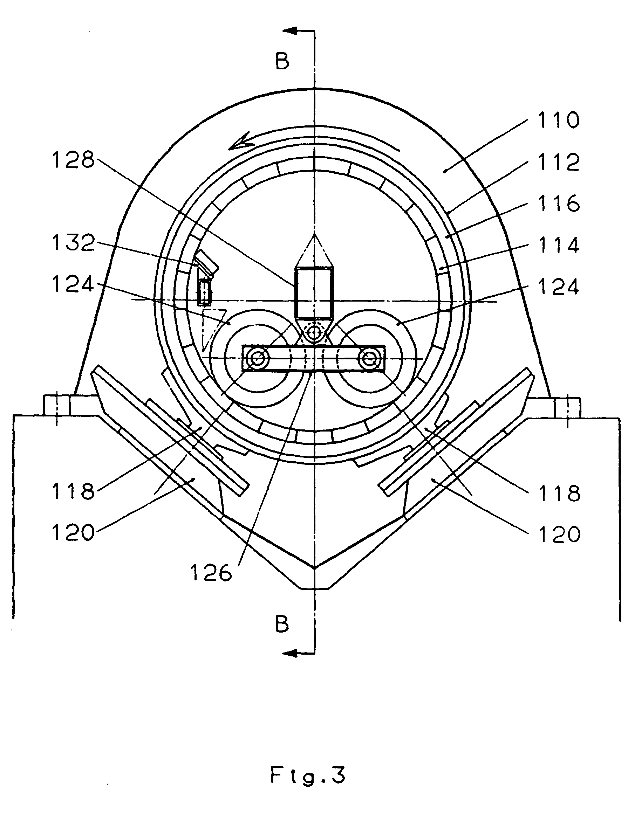

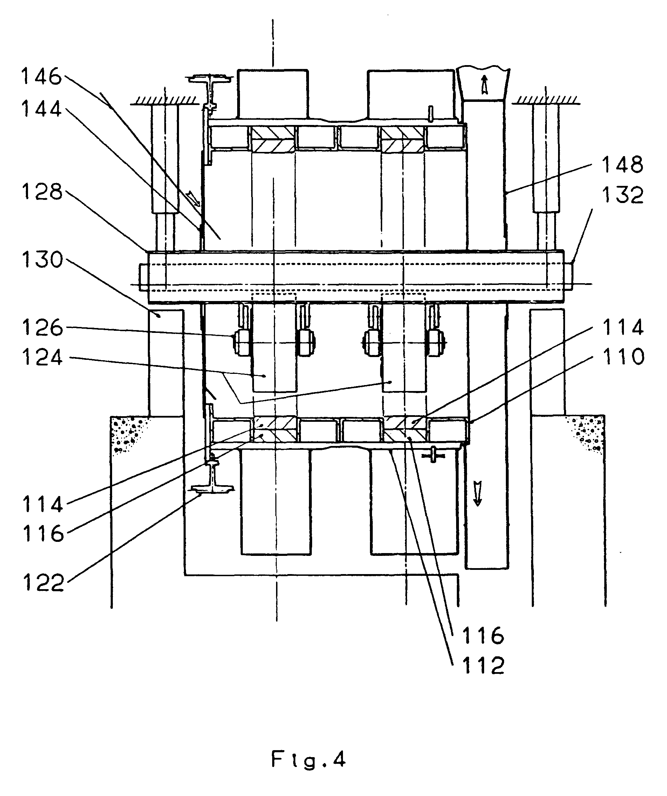

Dans la forme de réalisation représentée sur les figures 3 et 4, le corps 110 du broyeur est constitué par une virole cylindrique 112 à l'intérieur de laquelle sont montés deux anneaux 116 revêtus de plaques d'usure 114 constituant deux pistes de broyage. Le corps 110 est supporté par quatre patins 118, deux sous chaque anneau, reposant par l'intermédiaire de rotules sur des bâtis 120. Ces patins sont lubrifiés de la même manière que le coussinet 18 de la première forme de réalisation décrite ci-dessus. Une couronne dentée 122 fixée sur la virole permet d'entraîner le broyeur en rotation.

Quatre rouleaux 124 sont montés à l'intérieur de la virole de façon à pouvoir rouler sur les pistes 114, lorsque le broyeur est entraîné en rotation. Chaque rouleau est situé au-dessus d'un patin 118. Les rouleaux sont montés fous sur leurs axes, et les axes des rouleaux de chaque paire qui roulent sur une même piste, sont fixés sur un palonnier 126 articulé sur une poutre 128 disposée longitudinalement à l'intérieur de la virole et la traversant de part en part. Les extrémités de la poutre 128 sont guidées par des glissières solidaires de bâtis 130 ou par des leviers articulés sur ces bâtis. Des ressorts ou des vérins associés à un système hydropneumatique agissant sur les extrémités de la poutre ou sur les leviers permettent de presser les rouleaux sur les pistes. En variante, les ressorts ou vérins pourraient être placés entre les rouleaux et les palonniers ou entre ceux-ci et la poutre 128.

Un dispositif 132, de même conception que le dispositif 34, et muni de pales destinées à assurer l'avance de la matière d'une extrémité à l'autre du broyeur, est disposé dans la moitié supérieure du broyeur.

L'extrémité d'entrée de la virole est fermée par une paroi fixe 144 percée d'une owerture pour le passage d'une goulotte d'alimentation 146 et son autre extrémité débouche dans un carter 148 à travers lequel les produits broyés sont évacués.

En variante, le broyeur pourrait être équipé de deux goulottes d'alimentation et de deux dispositifs d'avancement de la matière placées en amont, en considérant le sens de rotation du broyeur, de chaque rouleau.

Au lieu d'être supporté par un coussinet ou des patins le corps rotatif du broyeur pourrait être supporté par des galets. On pourrait entraîner le ou les rouleaux en rotation, par exemple au moyen d'une allonge à cardans, l'anneau ou les anneaux étant alors entraînés par friction.

Les galets pourraient être diamétralement opposés, leurs axes étant situés dans un même plan vertical.

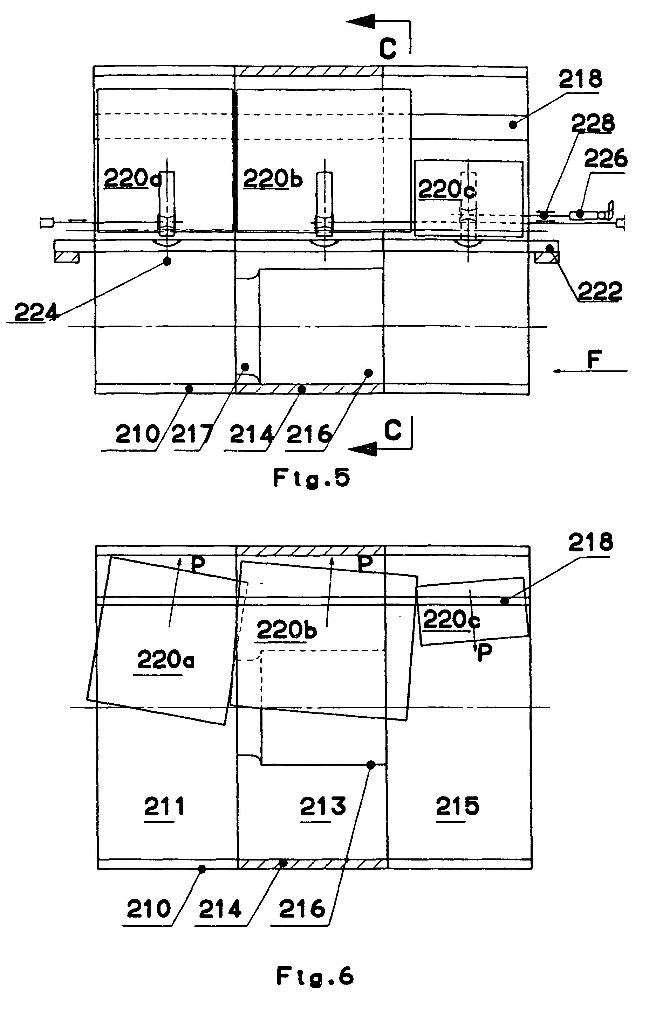

Le broyeur représenté sur les figures 5 à 8 est constitué par un tambour 210, à axe horizontal, qui est supporté par deux patins 212 permettant sa rotation autour de son axe; ces patins pourraient être remplacés par un coussinet ou des galets. Le tambour est entraîné en rotation par des moyens classiques, non représentés, par exemple par un groupe moto-réducteur dont l'arbre de sortie porte un pignon en prise avec une couronne dentée fixée sur la virole.

Le tambour est constitué par une virole revêtue intérieurement de plaques d'usure qui, dans la partie centrale, forment une piste de broyage annulaire 214. L'intérieur du tambour est ainsi divisé en une zone d'alimentation 211, une zone de broyage 213 et une zone d'évacuation 215.

Un rouleau 216 est monté à l'intérieur de la virole de façon à rouler sur la piste 214 lorsque le tambour 210 est entraîné en rotation. Ce rouleau est monté fou sur un arbre dont les extrémités sont guidées par des glissières verticales ou par des leviers et sont soumises à l'action de ressorts ou de vérins hydropneumatiques permettant de presser le rouleau sur la piste de broyage avec une force prédéterminée et réglable. Ce montage classique n'est pas représenté sur les dessins pour ne pas les obscurcir.

On pourrait utiliser plusieurs rouleaux disposés à l'intérieur de l'angle d'appui β du tambour délimité par les patins 212. Dans le cas où le tambour est supporté par un coussinet, cet angle est celui de la portée du coussinet.

A son extrémité tournée vers l'entrée du broyeur, le rouleau 216 comporte une partie de diamètre réduit 217 qui permet d'écraser les gros morceaux se trouvant dans les matières à broyer avant qu'elles n'atteignent la couche des matières à broyer sur laquelle roule la partie principale du rouleau et, par conséquent, d'améliorer l'homogéneité de cette couche et l'efficacité du broyage.

Dans le même esprit, on pourra, dans le cas de matières à granulométrie très hétérogène, réaliser un broyage systématique en utilisant un rouleau étagé formé de plusieurs portions de diamètres croissants de l'entrée vers la sortie ou, à la limite, un rouleau tronconique dont le petit diamètre se trouverait côté entrée et le grand diamètre côté sortie. Le même résultat pourrait être atteint en utilisant un rouleau cylindrique et une piste de broyage étagée ou tronconique avec son plus grand diamètre côté entrée et son petit diamètre côté sortie. En utilisant ensemble une piste et un rouleau étagés ou tronconiques, présentant dans chaque section droite, perpendiculaire à l'axe du broyeur, un rapport constant entre les diamètres de la piste et du rouleau, l'écrasement des gros morceaux et de la couche à broyer s'effectue sans cisaillement ni glissement relatif qui sont des facteurs d'usure des surfaces de travail de la piste et du rouleau. Les figures 9 à 11 montrent trois exemples d'application de ce principe. Sur la figure 9, la piste 214a et le rouleau 216a comportent chacun deux portions de diamètres différents, la portion côté entrée du broyeur ayant le plus grand diamètre et une étendue axiale nettement inférieure à l'autre portion; dans la forme de réalisation de la figure 10, la piste 214b et le rouleau 216b comportent chacun une portion tronconique, côté entrée du broyeur, et une portion cylindrique de plus grande étendue axiale; et la figure 11 montre une autre forme de réalisation dans laquelle la piste 214 c et le rouleau 216 c sont tronconiques, leur plus grand diamètre se trouvant du côté de l'entrée du broyeur. Sur ces figures, la flèche E indique le sens de progression des matières. Il faut noter que ce broyage systématique n'est possible que grâce au dispositif d'avance pas à pas qui assure une avance progressive dans la direction axiale des matières sur la piste.

En fonctionnement, le tambour est entraîné en rotation, dans le sens de la flèche R, à une vitesse supérieure à la vitesse critique, de telle sorte que toute la matière soit centrifugée et plaquée sur la surface intérieure du tambour, sur toute sa périphérie.

Un dispositif destiné à assurer l'avance de la matière, d'une extrémité à l'autre du tambour, est disposé dans la moitié supérieure du tambour, sur la partie descendante de la trajectoire circulaire des matières.

Ce dispositif est constitué par un racleur fixe 218 s'étendant sur toute la longueur du tambour et maintenu au contact ou à proximité de sa surface intérieure, et des plaques déflectrices 220 disposées côte à côte, sous le racleur, de façon à intercepter le flot des matières détachées du tambour par ce dernier.

Chacune des plaques déflectrices est montée sur un support 222 de façon à pouvoir pivoter autour d'un axe vertical 224 et un moteur 226, tel qu'un vérin, auquel la plaque est reliée par une bielle 228 permet de commander sa rotation autour de cet axe.

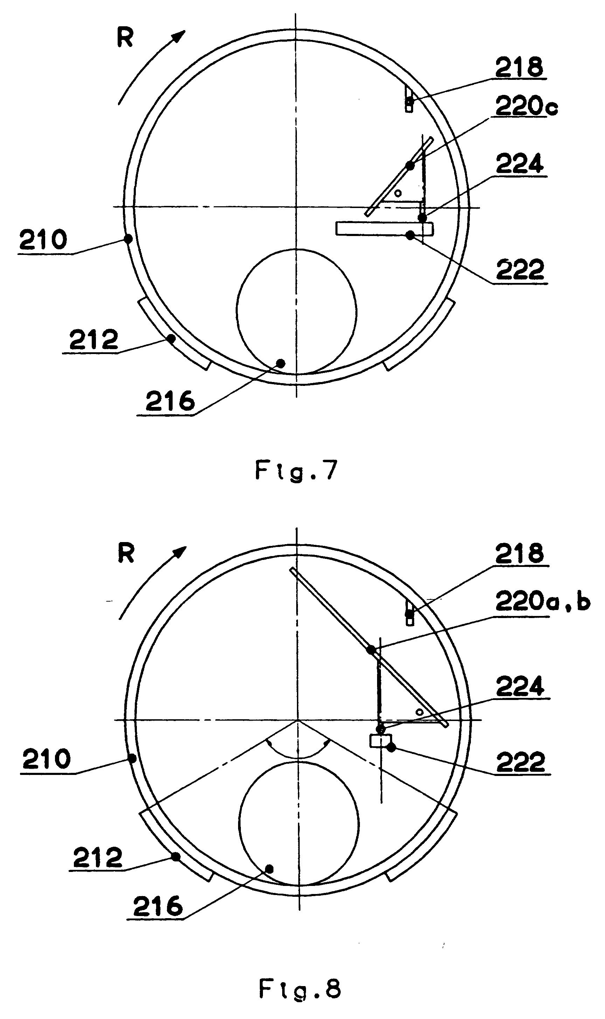

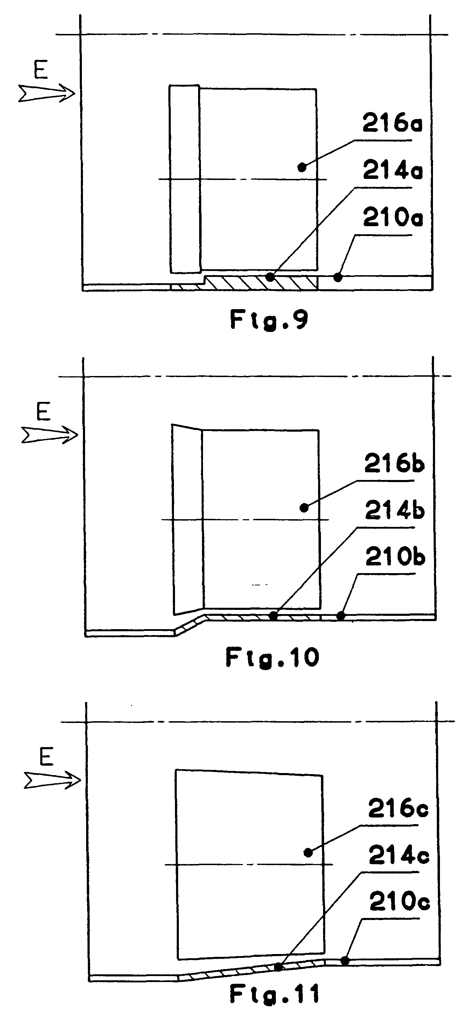

Ces plaques sont inclinées d'environ 45° et sont disposées soit comme représenté sur la figure 7 pour dévier les matières détachées par le racleur vers l'axe du tambour, soit comme représenté sur la figure 8 pour ramener les matières vers la virole.

Dans la forme de réalisation représentée sur le dessin, le dispositif comporte trois plaques déflectrices : une plaque 220a disposée dans la partie amont du tambour qui constitue la zône d'alimentation 211, une plaque 220 b disposée dans la partie centrale qui constitue la zone de broyage 213, et une plaque 220 c dans la partie aval qui constitue la zone d'évacuation des matières broyés 215. Les plaques 220a et 220b sont disposées de façon à renvoyer les matières détachées par le racleur vers la virole; la plaque 220c est disposée de façon à dévier les matières vers l'axe du tambour.

Le nombre et la disposition des plaques déflectrices pourraient être différents suivant les dimensions du broyeur et les résultats recherchés.

La figure 6 montre l'orientation des plaques déflectrices. Les matières détachées du tambour par le racleur 218 tombent sur les plaques et glissent sur celles-ci, le long des lignes de plus grande pente, dans la direction des flèches P. Les matières avancent donc à chaque tour du tambour dans une direction parallèle à son axe et sur une distance qui est une fraction de la largeur (étendue axiale) de la piste et qui dépend de l'orientation des plaques déflectrices et est réglable à volonté. Les matières sont ainsi amenées pas à pas du point d'introduction dans la zone d'alimentation jusque sur la piste de broyage, puis déplacées sur la piste de broyage et enfin évacuées à la vitesse voulue. L'orientation des plaques 220a, 220b et 220c étant réglable individuellement, il est possible d'adopter des vitesses d'avance différentes dans les trois zones du broyeur.

Dans la zone de broyage, l'avance à chaque tour du tambour représente une fraction de la largeur de la piste, de sorte que les matières subissent plusieurs broyages avant d'être évacuées.

Le réglage de l'orientation des plaques déflectrices peut être télécommandé et effectué pendant la marche du broyeur.

Le tableau suivant permet de comparer la qualité d'un ciment obtenu par broyage d'un clinker dans un broyeur à anneau, suivant l'invention, à celle d'un ciment standard (Ciment CPA 425 - 95 % clinker, 5% gypse) broyé de façon classique dans une installation équipée d'un broyeur à boulets. On constate que l'invention permet d'obtenir un ciment d'aussi bonne qualité avec une consommation d'énergie spécifique inférieure de 40 % à celle d'un broyeur à boulets.

| **Type de broyeur** | **Energie spécifique Kwh/t** | **Finesse** | | **Maniabilité en %** | **Pâte normale % d'eau** |
|---|---|---|---|---|---|
| | | **% de refus à 28 µ** | **Blaine cm2/g** | | |
| à boulets | 33 | 40,6 | 2 844 | 103 | 29 |
| à anneau | 20 | 35,6 | 2 880 | 96 | 28,6 |

| **Type de broyeur** | **Résistance kg/cm2** | | | | | | | |
|---|---|---|---|---|---|---|---|---|
| | **Flexion** | | | | **Compression** | | | |
| | 1j | 3j | 7j | 28j | 1j | 3j | 7j | 28j |
| à boulets | 31 | 54 | 68 | 89 | 130 | 250 | 343 | 520 |
| à anneau | 30 | 54 | 69 | 93 | 140 | 300 | 410 | 557 |

## Revendications

1. Broyeur comprenant un anneau rotatif (14 ; 116 ; 214), à axe horizontal, au moins un rouleau (30 ; 124 ; 216), apte à rouler sur la piste constituée par la surface intérieure de l'anneau, et à exercer une pression sur la matière se trouvant sur ladite piste, des moyens pour entraîner l'anneau en rotation à une vitesse suffisante pour que la matière puisse être maintenue sur ladite piste par la force centrifuge, et un dispositif (34 ; 132 ; 218 ; 220) apte à déplacer transversalement la matière sur la piste à chaque tour d'un pas égal à une fraction de sa largeur, caractérisé en ce que l'anneau est solidaire d'une virole cylindrique coaxiale (12 ; 112 ; 210), qui forme sur l'un des côtés de l'anneau une chambre d'admission (211) pour la matière à broyer, et en ce que le dispositif d'avance de la matière (34 ; 132 ; 218, 220 a) est prévu dans ladite chambre pour amener la matière, à chaque tour de tambour, pas à pas du point d'introduction dans la zone d'alimentation jusque sur la piste de broyage.

2. Broyeur selon la revendication 1, caractérisé en ce qu'il comporte deux rouleaux (124) angulairement espacés à l'intérieur de l'anneau et un dispositif d'avance de la matière est placé en amont de chaque rouleau, en considérant le sens de rotation de l'anneau.

3. Broyeur selon la revendication 1 ou 2, caractérisé en ce que l'anneau est supporté par un ou plusieurs appuis (18 ; 118) et l'un des appuis est placé sous le rouleau.

4. Broyeur selon la revendication 3, caractérisé en ce que chaque appui est constitué par un coussinet ou un patin (18, 118) relié à un système de lubrification qui maintient un film d'huile entre les surfaces de glissement du coussinet ou du patin et de l'anneau lorsque ce dernier est entraîné en rotation.

5. Broyeur selon la revendication 1, 2, 3 ou 4, caractérisé en ce que ledit dispositif d'avance de la matière est constitué par un racleur (218) s'étendant parallèlement à l'axe de l'anneau (214) et pénétrant dans la couche de matière retenue sur la surface intérieure de l'anneau par la force centrifuge pour l'en détacher, et par des plaques déflectrices (220a, 220b, 220c) disposées sous le racleur, à l'écart de celui-ci, de façon à intercepter les matières détachées par le racleur, et orientées de façon à les dévier vers la sortie du broyeur et à les déplacer parallèlement à l'axe de l'anneau à chaque tour sur une distance égale à une fraction de la largeur de la piste.

6. Broyeur selon la revendication 5, caractérisé en ce que chaque plaque déflectrice est montée de façon à pouvoir pivoter autour d'un axe (224), de préférence vertical, et est inclinée de façon à dévier les matières vers l'axe du broyeur.

7. Broyeur selon la revendication 5, caractérisé en ce que chaque paroi déflectrice est montée de façon à pouvoir pivoter autour d'un axe (224), de préférence vertical, et est inclinée de façon à dévier les matières vers la paroi du broyeur.

8. Broyeur selon la revendication 6 ou 7, caractérisé en ce qu'il comporte des moyens (224, 228) pour commander la rotation des plaques déflectrices et modifier leur orientation et, par conséquent, la vitesse d'avance axiale des matières.

9. Broyeur selon l'une quelconque des revendications 1 à 8, caractérisé en ce que le rouleau (216) et/ou la piste de broyage (214) ont un diamètre qui varie progressivement ou par degrés d'une extrémité à l'autre du rouleau et/ou d'un bord à l'autre de la piste, respectivement, de telle sorte que l'écartement entre le rouleau et la piste décroisse progressivement ou par degrés de l'entrée vers la sortie de la zone de broyage (213).

10. Broyeur selon la revendication 9, caractérisé en ce que le rapport des diamètres de la piste et du rouleau, dans la même section droite, reste constant sur toute la longueur axiale de la piste et du rouleau.

## Claims

1. Grinding mill comprising a horizontal-axis rotary ring (14; 116; 214), at least one roll (30; 124; 216) capable of rolling on the track constituted by the inner surface of the ring, and of exerting a pressure on the material lying on said track, means for rotating the ring at an adequate speed so that the material may be retained against the track by the centrifugal force, and a device (34; 132; 218, 220) capable of moving the material crosswise on the track by a step equal to a fraction of its width at each turn, and characterized in that the ring is integral with a coaxial cylindrical shell (12; 112; 210) that forms an inlet chamber (211) for the material to be ground, on one side of the ring, and in that the material forward moving device (34; 132; 218, 220 a) is provided in said chamber to move the material, at each turn of the drum, step by step, from the point of introduction into the feeding zone right onto the grinding track.

2. Mill according to claim 1, characterized in that it comprises two rolls (124) angularly spaced out inside the ring and a material forward moving device is placed upstream from each roll, considering the direction of rotation of the ring.

3. Mill according to claim 1 or 2, characterized in that the ring rests on one or several supports (18; 118) and one of the supports is placed under the roll.

4. Mill according to claim 3, characterized in that each support is constituted by a bushing or a shoe (18; 118) connected to a lubrication system that sustains an oil film between the sliding surfaces of the bushing or of the shoe and of the ring when the latter is rotated.

5. Mill according to claim 1, 2, 3 or 4, characterized in that said material forward moving device consists of a scraper (218) extending parallel to the axis of the ring (214) and penetrating the layer of material retained on the inside surface of the ring by the centrifugal force so as to loosen it, and of deflecting plates (220a, 220b, 220c) arranged under the scraper, off the latter, to as to intercept the material loosened by the scraper, and so directed as to divert it toward the mill outlet and to move it parallel to the axis of the ring a distance equal to a fraction of the width of the track at each turn.

6. Mill according to claim 5, characterized in that each deflecting plate is so installed as to be capable of swivelling on a pin (224), preferably vertical, and is tilted so as to divert the material toward the axis of the mill.

7. Mill according to claim 5, characterised in that each deflecting plate is so installed as to be capable of swivelling on a pin (224), preferably vertical, and is tilted so as to divert the material toward the wall of the mill.

8. Mill according to claim 6 or 7, characterized in that it includes means (224, 228) for controlling the rotation of the deflecting plates and changing their direction and, consequently, the forward travelling speed of the material.

9. Mill according to any of claims 1 to 8, characterized in that the diameter of the roll (216) and/or the grinding track (214) varies progressively or by degrees from one end of the roll to the other and/or from one edge of the track to the other, respectively, so that the distance between the roll and the track decreases progressively or by degrees from the inlet to the outlet of the grinding zone (213).

10. Mill according to claim 9, characterized in that the ratio between the track and roll diameters, in the same cross section, remains constant throughout the axial length of the track and the roll.

## Patentansprüche

1. Mühle mit einem Drehring (14 ; 116 ; 214) mit horizontaler Achse, mindestens einer Walze (30 ; 124 ; 216), die geeignet ist, auf der von der Ringinnenfläche gebildeten Bahn zu rollen und auf das sich auf dieser Bahn befindliche Mahlgut einen Druck auszuüben, Mitteln zum Antrieb des Ringes mit einer Drehzahl, die ausreichend ist, um das Mahlgut durch Zentrifugalkraft auf der genannten Bahn zu halten, und einer Vorrichtung (34 ; 132 ; 218 ; 220), die geeignet ist, das Mahlgut bei jeder Umdrehung um einen Bruchteil der Bahnbreite auf der Bahn vorwärts zu bewegen, dadurch gekennzeichnet, daß der Ring kraftschlüssig mit einem koaxialen zylindrischen Mantel (12 ; 112 ; 210) verbunden ist, der auf einer Seite des Ringes eine Mahlgut-Aufgabekammer (211) bildet, und daß in dieser Kammer die Mahlgutvorschubvorrichtung (34 ; 132 ; 218, 220a) vorgesehen ist, um das Mahlgut bei jeder Drehung der Trommel schrittweise von der Einfuhrstelle im Zuführbereich bis auf die Mahlbahn zu befördern.

2. Mühle nach Anspruch 1, dadurch gekennzeichnet, daß sie zwei innerhalb des Ringes winkelig im Abstand voneinander angeordnete Walzen (124) umfaßt und daß einlaufseitig jeder Walze - in Ringdrehrichtung gesehen - eine Mahlgutvorschubvorrichtung angebracht ist.

3. Mühle nach Anspruch 1 oder 2, dadurch gekennzeichnet, daß der Ring von einer oder mehreren Auflagern (18 ; 118) getragen wird, und daß eines der Auflager unter der Walze angeordnet ist.

4. Mühle nach Anspruch 3, dadurch gekennzeichnet, daß jedes Auflager aus einer Lagerschale oder einem Schuh (18, 118) besteht und mit einem Schmiersystem verbunden ist, das zwischen den Gleitflächen der Lagerschale bzw. des Schuhs und des Ringes einen Ölfilm aufrechterhält, wenn der Ring in Umdrehung versetzt wird.

5. Mühle nach Anspruch 1, 2, 3 oder 4, dadurch gekennzeichnet, daß besagte Mahlgutvorschubvorrichtung aus einem Abstreifer (218) besteht, der sich parallel zur Achse des Ringes (214) erstreckt und der in die durch die Zentrifugalkraft auf der Ringinnenfläche zurückgehaltene Mahlgutschicht eindringt, um sie davon zu lösen, und aus Umlenkplatten (220a, 220b, 220c), die unter dem Abstreifer und im Abstand von letzterem angeordnet sind, um das vom Abstreifer gelöste Mahlgut abzufangen, und die so orientiert sind, daß es in Richtung Mühlenaustrag umgeleitet und bei jeder Umdrehung des Ringes um einen einem Bruchteil der Bahnbreite entsprechenden Abstand parallel zur Achse des Ringes vorgeschoben wird.

6. Mühle nach Anspruch 5, dadurch gekennzeichnet, daß die Umlenkplatten je derart montiert sind, daß sie um eine vorzugsweise vertikale Achse (224) schwenkbar sind, und so geneigt, daß das Mahlgut in Richtung Mühlenmitte umgeleitet wird.

7. Mühle nach Anspruch 5, dadurch gekennzeichnet, daß die Umlenkplatten je derart montiert sind, daß sie um eine vorzugsweise vertikale Achse (224) schwenkbar sind und so geneigt, daß das Mahlgut in Richtung der Mühlenwand umgelenkt wird.

8. Mühle nach Anspruch 6 oder 7, dadurch gekennzeichnet, daß sie Mittel (224, 228) umfaßt, um die Umlenkplatten zu drehen und ihre Orientation und demzufolge die Mahlgutaxialvorschubgeschwindigkeit zu ändern.

9. Mühle nach irgendeinem der Ansprüche 1 bis 8, dadurch gekennzeichnet, daß die Walze (216) und/oder die Mahlbahn (214) einen Durchmesser haben, der sich allmählich oder stufenweise von einem zum anderen Ende der Walze und/oder einer Kante zur anderen der Bahn ändert, sodaß der Abstand zwischen Walze und Bahn allmählich bzw. stufenweise vom Einlauf zum Auslauf der Mahlzone (213) abnimmt.

10. Mühle nach Anspruch 9, dadurch gekennzeichnet, daß das Durchmesserverhältnis der Bahn und der Walze - in demselben Querschnitt - auf der ganzen Axiallänge der Bahn und der Walze konstant bleibt.
